# EUROPÄISCHE PATENTSCHRIFT

(11) **EP 1 760 406 B1**
(45) Veröffentlichungstag und Bekanntmachung des Hinweises auf die Patenterteilung: **10.06.2009**
(21) Anmeldenummer: 06017730.0
(22) Anmeldetag: 25.08.2006
(51) Int. Cl.: F24D 3/10

(54) **Rohrverteiler für eine Heizungs- oder Kühlanlage**
Manifold for a heating or cooling plant
Distributeur de fluide pour une installation de chauffage ou une installation réfrigérante

(30) Priorität: 05.09.2005 DE 202005014029 U
(43) Veröffentlichungstag der Anmeldung: 07.03.2007
(73) Patentinhaber: Comfort-Sinusverteiler GmbH, 48493 Wettringen (DE)
(72) Erfinder: Strautmann, Wolfgang, 49196 Bad Laer (DE)
(74) Vertreter: Linnemann, Winfried

(56) Entgegenhaltungen:
- EP-B1- 0 847 515
- DE-C1- 4 234 960
- DE-U1-8202005 005 00

## Beschreibung

Die vorliegende Erfindung betrifft einen Rohrverteiler für eine Heizungs- oder Kühlanlage mit einem Primärkreislauf und mehreren Sekundärkreisläufen, mit einem länglichen, im Betrieb horizontal angeordneten Gehäuse, in dem eine Vorlaufkammer mit mehreren Vorlaufanschlüssen und eine Rücklaufkammer mit mehreren Rücklaufanschlüssen der Sekundärkreisläufe vorgesehen sind, und mit einer hydraulischen Weiche zur hydraulischen Entkopplung des an einen Vorlaufanschluß und einen Rücklaufanschluß des Rohrverteilers angeschlossenen Primärkreislaufes von den Sekundärkreisläufen, wobei die hydraulische Weiche in das Gehäuse integriert ist und eine Weichenkammer umfaßt, die an zwei horizontal voneinander beabstandeten Stellen einerseits mit der Vorlaufkammer und andererseits mit der Rücklaufkammer strömungsmäßig verbunden ist.

Die DE 42 34 960 C1 offenbart einen Rohrverteiler mit hydraulischem Entkoppler, der zwischen der Vorlaufkammer und der Rücklaufkammer im Gehäuse des Rohrverteilers integriert ist. Eine Aussparung definiert in Verbindung mit den Gehäusewandungen einen Entkopplungsraum, in welchen der Vorlaufanschluß und der Rücklaufanschluß des Primärkreislaufes, also Kesselkreislaufes, einer Heizungsanlage münden.

Als nachteilig wird bei diesem bekannten Rohrverteiler angesehen, daß es hier leicht zu einer unerwünschten Kreislaufströmung im Primärkreislauf kommen kann, wodurch die erzeugte Wärme nicht im gewünschten Maße an die Sekundärkreisläufe, also Heizkreisläufe, übergeleitet wird. Dies hat zur Folge, daß die von einem oder mehreren Heizkesseln theoretisch lieferbare Wärmeleistung nicht im vollen Umfang an die Sekundärkreisläufe mit darin vorgesehenen Wärmeverbrauchern geliefert werden kann. Die Ursache hierfür liegt insbesondere darin, daß der Vorlaufanschluß und der Rücklaufanschluß des Primärkreislaufes an dem Entkopplungsraum relativ nahe beieinander liegen und daß die Strömung der Wärmetransportflüssigkeit, die durch den Vorlaufanschluß in den Entkopplungsraum eintritt, in Richtung zum Rücklaufanschluß des Primär- oder Kesselkreislaufes gerichtet ist und so bevorzugt in den Rücklauf, d.h. wieder zum Heizkessel gelangt. Die Rücklauftemperatur der Wärmetransportflüssigkeit, die zum Kessel gelangt, ist dadurch unerwünscht hoch, was abträglich für die Leistung der Heizungsanlage ist.

Die DE 20 2005 005 008 U zeigt einen Rohrverteiler für eine Heizungs- oder Kühlanlage mit einem länglichen, in Betrieb horizontal angeordneten Gehäuse, in dem eine Vorlaufkammer mit mehreren Vorlaufanschlüssen und eine Rücklaufkammer mit mehreren Rücklaufanschlüssen für mehrere Sekundärkreisläufe vorgesehen sind. Weiterhin umfaßt der Rohrverteiler eine hydraulische Weiche zur hydraulischen Entkopplung eines an einen Vorlaufanschluß und einen Rücklaufanschluß der Weiche angeschlossenen Primärkreislaufes von den Sekundärkreisläufen, wobei die hydraulische Weiche in das Gehäuse integriert ist und einen mit der Vorlaufkammer und der Rücklaufkammer strömungsmäßig verbundenen Weichenraum umfaßt, in den der Vorlaufanschluß und der Rücklaufanschluß des Primärkreises münden.

Weiterhin ist im Gehäuse als Weichenraum eine sich über mindestens einen Teil der horizontalen Länge des Gehäuses erstreckende Weichenkammer vorgesehen und die Weichenkammer ist an zwei horizontal voneinander beabstandeten Stellen einerseits mit der Vorlaufkammer und andererseits mit der Rücklaufkammer strömungsmäßig verbunden.

Mit diesem bekannten Rohrverteiler lassen sich die Funktionen des Verteilens und Sammelns einer Wärmetransportflüssigkeit und die Funktion einer hydraulischen Weiche in einer Baueinheit vereinigen. Es hat sich jedoch als wünschenswert herausgestellt, hinsichtlich der hydraulischen Weiche zu einer kompakteren Bauweise zu kommen, um den Rohrverteiler insgesamt kompakter fertigen zu können oder um in einem Rohrverteiler mit vorgegebener Größe mehr Raum für die Vorlaufkammer und die Rücklaufkammer zu erhalten. Bei diesem bekannten Rohrverteiler muß die Weichenkammer relativ groß, insbesondere relativ lang sein, um im Falle einer Ausgleichsströmung durch die Weichenkammer hindurch eine gute Vermischung von wärmerer und kälterer Wärmetransportflüssigkeit zu erzielen und damit eine homogene Temperatur der Wärmetransportflüssigkeit auch im Falle des Auftretens einer Ausgleichsströmung zu gewährleisten.

Für die vorliegende Erfindung stellt sich deshalb die Aufgabe, einen Rohrverteiler der eingangs genannten Art zu schaffen, der die vorstehend dargelegten Nachteile vermeidet und bei dem insbesondere erreicht wird, daß eine von einem oder mehreren Kesseln erzeugte Wärmeleistung oder eine von einer oder mehreren Kältemaschinen erzeugte Kälteleistung aus einem Primärkreislauf im vollem Umfang in die zugehörigen Sekundärkreisläufe, d.h. Heizkreisläufe bzw. Kühlkreisläufe, gelangt und daß somit ein hoher Wirkungsgrad der Heizungs- oder Kühlanlage insgesamt gewährleistet wird. Gleichzeitig soll der Rohrverteiler die Funktion einer hydraulischen Weiche zur Entkopplung der Sekundärkreisläufe von dem Primärkreislauf uneingeschränkt erfüllen und dabei eine kompakte Bauweise aufweisen und für eine gute Mischung und damit homogene Temperatur der Wärmetransportflüssigkeit insbesondere im Vorlauf der Sekundärkreisläufe sorgen.

Die Lösung dieser Aufgabe gelingt erfindungsgemäß mit einem Rohrverteiler der eingangs genannten Art, der dadurch gekennzeichnet ist,
- daß der Vorlaufanschluß des Primärkreislaufes in Form eines Rohrstutzens von außen durch die Weichenkammer hindurch und durch eine Durchbrechung in einer die Weichenkammer von der Vorlaufkammer abgrenzenden Trennwand hindurchgeführt ist und in die Vorlaufkammer mündet und
- daß die Durchbrechung in der Trennwand größer ist als der Außendurchmesser des Rohrstutzens und um den Rohrstutzen herum einen ringförmigen Durchlaß als Strömungsverbindung zwischen der Weichenkammer und der Vorlaufkammer bildet.

Erfindungswesentlich mündet bei dem neuen Rohrverteiler der Vorlaufanschluß des Primärkreislaufes nicht mehr, wie dies bisher üblich war, in die Weichenkammer, sondern ist durch die Weichenkammer hindurchgeführt und mündet dann in die Vorlaufkammer der Sekundärkreisläufe. Die Strömungsverbindung zwischen der Weichenkammer und der Vorlaufkammer wird hier durch den ringförmigen Durchlaß um den Rohrstutzen herum an der Stelle, an der der Rohrstutzen durch die Trennwand hindurchtritt, gebildet. Durch Bemessung des Durchmessers und der Form dieser Durchbrechung und des Außendurchmessers des Rohrstutzens kann der Querschnitt des ringförmigen Durchlasses konstruktiv festgelegt werden. Durch diese Ausgestaltung des Rohrverteilers wird vorteilhaft erreicht, daß eine Ausgleichsströmung auf der Seite des Vorlaufanschlusses und Rücklaufanschlusses des Primärkreislaufes, der beispielsweise ein Kesselkreislauf ist, in Form einer primärkreisinternen, z.B. kesselkreisinternen, Quellen-Senken-Strömung erfolgt, wodurch die sekundärkreisseitige Strömung, also die Strömung im Bereich der Vorlaufanschlüsse und Rücklaufanschlüsse der Sekundärkreisläufe, weitestgehend unberührt bleibt. Dies ist insbesondere beim Anfahren des Heizkessels oder der Heizkessel oder alternativ einer zugehörigen Kältemaschine oder bei der Versorgung mit einer Mindestumlaufmenge an Wärme- bzw. Kältetransportflüssigkeit hilfreich. Die konzentrische Anordnung des Rohrstutzens in der Durchbrechung in der Trennwand sorgt außerdem dafür, daß vorteilhaft die sekundärkreisseitige Ausgleichsströmung in Form einer konzentrischen Ringspaltströmung erfolgt, wodurch eine perfekte Durchmischung in der Vorlaufkammer ohne eine speziell dafür vorgesehene Mischkammer garantiert wird. Dabei wird vorteilhaft auch noch erreicht, daß die aus den Sekundärkreisläufen gesammelte Rücklaufwärmetransportflüssigkeit mit einer daraus resultierenden homogenen Mischtemperatur der Vorlaufbeimischung zur Verfügung steht. Eine unerwünschte unmittelbare Kurzschlußströmung vom Vorlaufanschluß des Primärkreislaufes zu dessen Rücklaufanschluß wird dagegen bei dem erfindungsgemäßen Rohrverteiler sicher ausgeschlossen. Da keine Mischkammer benötigt wird und weil auch die Weichenkammer zur Erzielung der guten Mischung von wärmerer und kälterer Wärmetransportflüssigkeit kein besonders großes Volumen benötigt, kann der Rohrverteiler sehr kompakt gestaltet werden und bietet relativ zum Gesamtvolumen des Gehäuses einen vorteilhaft großen Anteil davon für die Unterbringung der Vorlaufkammer und der Rücklaufkammer.

In einer ersten Weiterbildung ist vorgesehen, daß der Rücklaufanschluß des Primärkreislaufes unmittelbar von außen in die Weichenkammer mündet. Damit wird die Ausführung des Rohrverteilers hinsichtlich der Anordnung und Anbringung des Rücklaufanschlusses des Primärkreislaufes besonders einfach.

Weiterhin ist dabei bevorzugt vorgesehen, daß die strömungsmäßige Verbindung zwischen der Weichenkammer und der Rücklaufkammer durch eine zweite, mit dem Rücklaufanschluß des Primärkreislaufes fluchtende Durchbrechung in einer die Weichenkammer von der Rücklaufkammer abgrenzenden Trennwand gebildet ist. Mit dieser Ausgestaltung wird vorteilhaft erreicht, daß die Hauptströmung im Rücklauf von der Rücklaufkammer durch die Weichenkammer hindurch zum Rücklaufanschluß des Primärkreislaufes ohne störende Umlenkungen erfolgen kann, was zu einer guten Funktion beiträgt.

In einer alternativen Weiterbildung des erfindungsgemäßen Rohrverteilers wird vorgeschlagen, daß der Rücklaufanschluß des Primärkreislaufes in Form eines Rohrstutzens von außen durch die Weichenkammer hindurch und durch eine zweite Durchbrechung in einer die Weichenkammer von der Rücklaufkammer abgrenzenden Trennwand hindurchgeführt ist und in die Rücklaufkammer mündet und daß die zweite Durchbrechung in der Trennwand größer ist als der Außendurchmesser dieses Rohrstutzens und um den Rohrstutzen herum einen ringförmigen Durchlaß als Strömungsverbindung zwischen der Weichenkammer und der Rücklaufkammer bildet. In dieser Ausführung ist also der Rücklaufanschluß des Primärkreislaufes übereinstimmend mit dem Vorlaufanschluß des Primärkreislaufes ausgebildet, wobei der Vorlaufanschluß des Primärkreislaufes in die Vorlaufkammer und der Rücklaufanschluß des Primärkreislaufes in die Rücklaufkammer mündet. Dabei hat nun der Konstrukteur des Rohrverteilers die Möglichkeit, sowohl im Bereich des Vorlaufanschlusses als auch im Bereich des Rücklaufanschlusses des Primärkreislaufes durch die Bemaßung der jeweils zugehörigen ersten bzw. zweiten Durchbrechung das Verhalten des Rohrverteilers hinsichtlich seiner Weichenfunktion in gewünschter Weise zu beeinflussen und festzulegen.

Für alle vorstehend beschriebenen Ausführungen des Rohrverteilers gemäß Erfindung besteht die Möglichkeit, daß der Rohrstutzen des Vorlaufanschlusses des Primärkreislaufes und/oder der Rohrstutzen des Rücklaufanschlusses des Primärkreislaufes (jeweils) in einem in der Weichenkammer liegenden Rohrstutzenabschnitt mit einer oder mehreren Durchbrechungen versehen sind/ist. In dieser Ausgestaltung wird für eine bedarfsweise auftretende Ausgleichsströmung nicht nur eine Strömung durch die erste und zweite Durchbrechung in der Trennwand, sondern zusätzlich auch ein Strömungsweg durch die in einem oder beiden Rohrstutzen vorgesehenen Durchbrechungen zur Verfügung gestellt. Mit diesen Durchbrechungen in einem oder beiden Rohrstutzen wird dem Konstrukteur eine weitere Möglichkeit zur Verfügung gestellt, das Verhalten des Rohrverteilers hinsichtlich seiner Weichenfunktion in gewünschter Weise zu beeinflussen und zu optimieren.

Um eine gute Flüssigkeitsdurchmischung und damit eine homogene Temperaturverteilung auf möglichst kleinem Raum zu erzielen, haben die erwähnten Durchbrechungen im Rohrstutzenabschnitt (jeweils) bevorzugt die Form einer Perforation. Eine Perforation besteht aus einer relativ großen Anzahl von relativ kleinen Durchbrechungen, was der gewünschten guten Durchmischung zugute kommt.

Für alle vorstehend erläuterten Ausführungen des Rohrverteilers ist bevorzugt vorgesehen, daß die Trennwand horizontal angeordnet ist, daß die Vorlaufkammer und die Rücklaufkammer nebeneinander liegen und voneinander durch eine gewellte Zwischenwand getrennt sind, die vertikal zwischen einer Deckwand des Gehäuses und der horizontalen Trennwand angeordnet ist, und daß die Vorlaufanschlüsse der Vorlaufkammer und die Rücklaufanschlüsse der Rücklaufkammer für die Sekundärkreisläufe alle unmittelbar in ihre zugehörige Kammer münden. In dieser Ausgestaltung können insbesondere die Vorlaufanschlüsse und die Rücklaufanschlüsse für die Sekundärkreisläufe besonders einfach ausgestaltet und besonders einfach mit dem Gehäuse verbunden werden, weil sie lediglich mit der Deckwand verbunden werden müssen. Eine Weiterführung eines Teils der Anschlüsse durch eine der Kammern hindurch in die andere Kammer ist hier vorteilhaft nicht erforderlich.

Die Trennung der Vorlaufkammer und der Rücklaufkammer voneinander durch die gewellte Zwischenwand bietet vorteilhaft die Möglichkeit, daß die Vorlaufanschlüsse der Vorlaufkammer und die Rücklaufanschlüsse der Rücklaufkammer für die Sekundärkreisläufe in einer Linie an der oberseitigen Deckwand des Gehäuses liegen. Damit wird ein besonders einfaches Anordnen und Anschließen der zugehörigen weiterführenden Rohrleitungen ermöglicht.

Insbesondere zur Vermeidung von Anschlußfehlern ist weiter vorgesehen, daß der Vorlaufanschluß und der Rücklaufanschluß des Primärkreislaufes voneinander in Längsrichtung des Gehäuses beabstandet an einer unterseitigen Bodenwand des Gehäuses liegen. Eine Verwechslung des Vorlaufanschlusses und des Rücklaufanschlusses des Primärkreislaufes mit einem der Vorlaufanschlüsse oder Rücklaufanschlüsse der Sekundärkreisläufe ist so praktisch ausgeschlossen.

Wie oben schon erläutert, kann der erfindungsgemäße Rohrverteiler besonders kompakt ausgeführt werden. Vorzugsweise ist dabei vorgesehen, daß die Vorlaufkammer und die Rücklaufkammer ein im wesentlichen gleiches Volumen aufweisen und daß die Weichenkammer ein Volumen aufweist, das 25 bis 50 % des Volumens der Vorlaufkammer oder der Rücklaufkammer beträgt. Damit nimmt die Weichenkammer nur einen relativ kleinen Teil des Gesamtvolumens des Gehäuses des Rohrverteilers ein, was zu einer besonders kompakten Bauweise beiträgt.

Insbesondere im Sinne einer möglichst einfachen und kostengünstigen Fertigung des erfindungsgemäßen Rohrverteilers wird vorgeschlagen, daß die Weichenkammer im Gehäuse die Form einer Leitung oder eines Kastens mit einem eckigen oder runden Querschnitt hat und stirnendseitig geschlossen ist. In dieser Ausführung besteht die vorteilhafte Möglichkeit, einen konventionellen Rohrverteiler, der bisher keine Weichenfunktion hat, nachträglich mit der hydraulischen Weiche auszustatten, wobei keine besonders großen Änderungen im Fertigungsablauf des Rohrverteilers erforderlich werden. Es muß lediglich die Weichenkammer in Form der Leitung oder des Kastens mit in das Gehäuse des Rohrverteilers eingebaut werden und es muß die Zwischenwand zwischen Vorlaufkammer und Rücklaufkammer entsprechend angepaßt, insbesondere im Bereich der Weichenkammer ausgespart, werden.

Wie von Verteilern und hydraulischen Weichen an sich bekannt, kann auch der erfindungsgemäße Rohrverteiler mindestens einen Schlammsammelbereich und/oder einen Schlammabzugstutzen in einem Bereich mit einer geringen Strömungsgeschwindigkeit aufweisen.

Weiter können an dem Rohrverteiler eine oder mehrere Temperaturfühlermuffen an geeigneten Stellen vorgesehen sein, um durch Temperaturfühler in den Temperaturfühlermuffen beispielsweise einen Heizkessel einer Heizungsanlage oder eine Kältemaschine einer Kühlanlage in einem optimalen Regelungsverhalten anzusteuern.

Um störende Luftblasen aus der Wärmetransportflüssigkeit möglichst einfach entfernen zu können, ist zweckmäßig an der oberseitigen Deckwand des Gehäuses mindestens ein Entlüftungsstutzen angeordnet.

Ein weiterer Beitrag zu einer möglichst einfachen und kostengünstigen Fertigung des Rohrverteilers bei gleichzeitig guter Belastbarkeit und Haltbarkeit besteht darin, daß der Rohrverteiler bevorzugt aus vorgeformten, miteinander verschweißten Stahlteilen besteht. Vorteilhaft können die Stahlteile Profilabschnitte oder gekantete Bleche sein, was bei der Fertigung einen relativ geringen Bearbeitungsaufwand erfordert.

Wie schon erwähnt, ist der Rohrverteiler sowohl in Heizungsanlagen als auch in Kälteanlagen nutzbringend einsetzbar. In einer bevorzugten Ausgestaltung ist der Rohrverteiler ein Heizkreisverteiler und -sammler zur hydraulischen Verbindung eines den Primärkreislauf bildenden Wärmequellenkreises mit mehreren die Sekundärkreisläufe bildenden Wärmeverbraucherkreisen.

In einer alternativen, ebenfalls bevorzugten Ausgestaltung ist der erfindungsgemäße Rohrverteiler eine Kaskadeneinheit zur hydraulischen Verbindung mehrerer Wärmequellenkreise mit einem Wämeverbraucherkreis.

Im folgenden werden drei Ausführungsbeispiele des erfindungsgemäßen Rohrverteilers anhand einer Zeichnung erläutert. Die Figuren der Zeichnung zeigen:
- Figur 1: den Rohrverteiler in einer ersten Ausführung im Längsschnitt,
- Figur 2: den Rohrverteiler aus Figur 1 im Querschnitt,
- Figur 3: den Rohrverteiler aus Figur 1 in perspektivischer aufgeschnittener Ansicht,
- Figur 4: das in Figur 3 eingekreiste Detail IV in vergrößerter Darstellung,
- Figur 5: den Rohrverteiler aus Figur 1 in Draufsicht,
- Figur 6: den Rohrverteiler in einer zweiten Ausführung im Längsschnitt,
- Figur 7: den Rohrverteiler aus Figur 6 im Querschnitt,
- Figur 8: den Rohrverteiler aus Figur 6 in perspektivischer aufgeschnittener Ansicht,
- Figur 9: das in Figur 8 eingekreiste Detail IX in vergrößerter Darstellung,
- Figur .10: den Rohrverteiler aus Figur 6 in Draufsicht und
- Figur 11: den Rohrverteiler in einer dritten Ausführung in perspektivischer aufgeschnittener Ansicht.

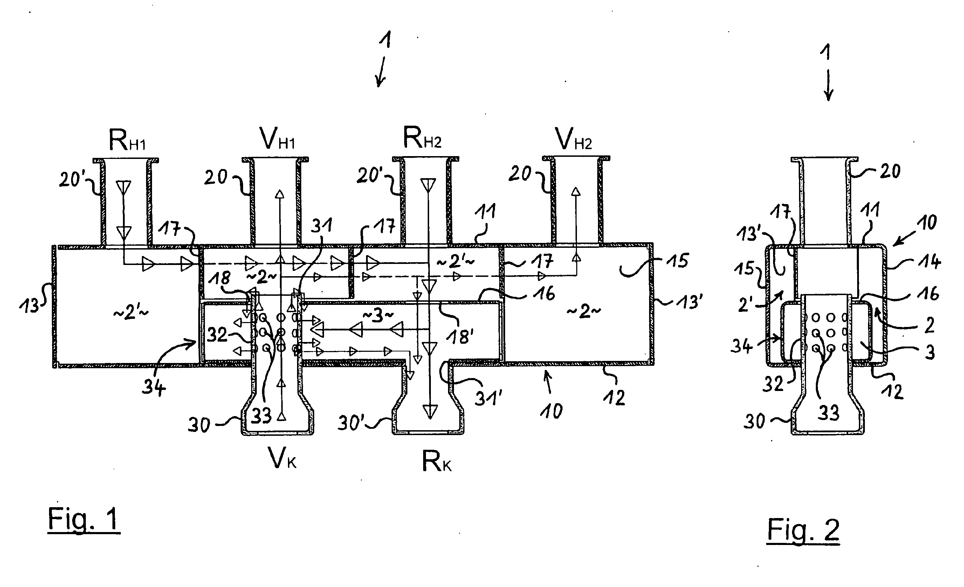

Der Rohrverteiler 1 gemäß den Figuren 1 bis 5 besitzt ein Gehäuse 10, das aus abgekanteten Stahlblechen oder Profilabschnitten zusammengeschweißt ist. Das Gehäuse 10 umfaßt eine Deckwand 11, eine Bodenwand 12, zwei die Stirnenden 13 und 13' bildende Wände sowie eine Rückwand 15 und eine Vorderwand 14. Im Inneren des Gehäuses 10 ist eine vertikale, in ihrem Verlauf in Horizontalrichtung gesehen gewellte Zwischenwand 17 angeordnet. Im Gehäuse 10 liegen voneinander durch die Zwischenwand 17 getrennt eine Vorlaufkammer 2 und eine Rücklaufkammer 2'. Die Vorlaufkammer 2 und die Rücklaufkammer 2' erstrecken sich hier über die gesamte horizontale Länge des Gehäuses 10.

Im unteren und in Längsrichtung gesehen mittleren Bereich des Gehäuses 10 liegt eine Weichenkammer 3, die hier durch einen in das Gehäuse 10 eingesetzten Weichenkammerkasten 34 mit einer oberseitigen, horizontalen Trennwand 16 begrenzt ist. Die Weichenkammer 3 steht in ihrem linken, dem ersten Stirnende 13 des Gehäuses 10 zugewandten Bereich über eine erste Durchbrechung 18 in der Trennwand 16 nach oben hin in Strömungsverbindung mit der Vorlaufkammer 2. In ihrem rechten, dem zweiten Stirnende 13' des Gehäuses 10 zugewandten Bereich steht die Weichenkammer 3 über eine weitere Durchbrechung 18' in der Trennwand 16 ebenfalls nach oben hin in Strömungsverbindung mit der Rücklaufkammer 2'.

Links und rechts von der Weichenkammer 3 erstreckt sich die gewellte Zwischenwand 17 über die gesamte innere Höhe des Gehäuses 10. Im Bereich der Weichenkammer 3 nimmt die gewellte Zwischenwand nur die freie Höhe im Gehäuse 10 über der Weichenkammer 3, also über der Trennwand 16, ein.

Mit der Vorlaufkammer 2 sind im dargestellten Ausführungsbeispiel zwei Vorlaufanschlüsse 20 von zwei Sekundärkreisläufen strömungsmäßig verbunden, die Wärmetransportflüssigkeit zu zwei Heizkreisen H1 und H2 führen.

Mit der Rücklaufkammer 2' sind zwei Rücklaufanschlüsse 20' verbunden, die Wärmetransportflüssigkeit von den zuvor erwähnten zwei Sekundärkreisläufen, hier den Heizkreisen H1 und H2, zum Verteiler 1 zurückführen.

Die Vorlaufanschlüsse 20 und die Rücklaufanschlüsse 20' liegen dabei als untereinander gleiche Anschlußstutzen an der Deckwand 11 des Gehäuses 10 auf einer Linie nebeneinander und sind an ihrem äußeren Ende jeweils mit einem Anschlußflansch versehen. Bei Bedarf sind auch unterschiedlich große Anschlußstutzen verwendbar.

Unterseitig am Gehäuse 10, also an dessen Bodenwand 12, sind hier je ein Vorlaufanschluß 30 und Rücklaufanschluß 30' eines Primärkreislaufes, hier eines Kesselkreislaufes K, angeordnet, die mit dem Vorlauf und dem Rücklauf eines Heizkessels strömungsmäßig verbunden sind. Der Vorlaufanschluß 30 und der Rücklaufanschluß 30' sind dabei jeweils als Anschlußstücke ausgebildet, die an ihrem äußeren Ende mit einem Rohrleitungsanschluß ausgebildet sind.

Der Vorlaufanschluß 30 ragt hier in Form eines Rohrstutzens 32 in das Innere des Gehäuses 10 hinein. Dabei läuft der Rohrstutzen 32 vertikal nach oben durch die Weichenkammer 3 und durch eine Durchbrechung 18 in der Trennwand 16 hindurch und mündet mit seinem inneren Ende 31 in die Vorlaufkammer 2.

Die Durchbrechung 18 hat einen Durchmesser, der größer ist als Außendurchmesser des Rohrstutzens 32, sodaß um den Rohrstutzen 32 herum ein ringförmiger Durchlaß frei bleibt. Die Durchbrechung 18 bildet eine Strömungsverbindung mit vorgegebenem Querschnitt zwischen der Weichenkammer 3 und der Vorlaufkammer 2.

In seinem in der Weichenkammer 3 liegenden Abschnitt besitzt der Rohrstutzen 32 mehrere eine Perforation bildende Durchbrechungen 33, z.B. Bohrungen.

Das innere Ende 31' des Rücklaufanschlusses 30' des Primärkreislaufes liegt bündig mit der Bodenwand 12. Vertikal oberhalb des Endes 31' dieses Rücklaufanschlusses 30' ist in der Trennwand 16 eine zweite, runde Durchbrechung 18' angebracht. Die Durchbrechung 18' bildet eine Strömungsverbindung mit vorgegebenem Querschnitt zwischen der Weichenkammer 3 und der Rücklaufkammer 2'.

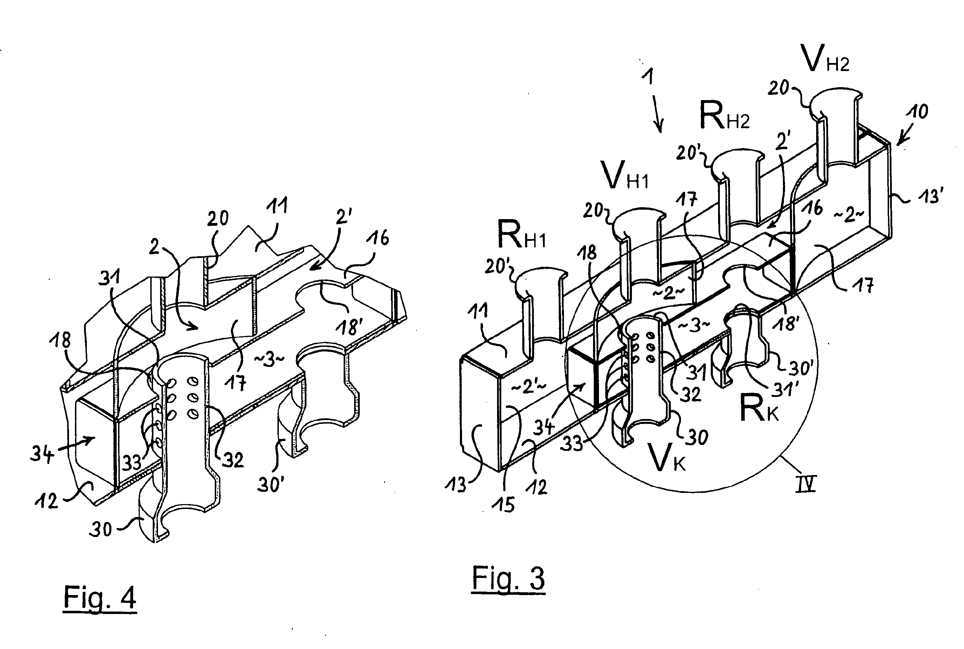

Der Vorlaufanschluß 30 und der Rücklaufanschluß 30' des Primärkreislaufes sind hier, wie die Figuren 1 und 3 deutlich zeigen, deckungsgleich, also in Flucht mit dem inneren Vorlaufanschluß 20 bzw. dem inneren Rücklaufanschluß 20' der Sekundärkreisläufe angeordnet.

Bei Ausführung des Rohrverteilers 1 als Heizkreisverteiler ist mit den Anschlüssen 30 und 30' der Heizkessel verbunden. Der Heizkessel speist durch den Vorlaufanschluß 30 eine erhitze Wärmetransportflüssigkeit in die Vorlaufkammer 2 und von dieser durch die beiden Vorlaufanschlüsse 20 in die beiden nachgeschalteten Heizkreise H1 und H2 ein, um dort vorgesehene Wärmeverbraucher mit Wärmeenergie zu versorgen.

Die abgekühlte Wärmetransportflüssigkeit strömt durch die Rücklaufanschlüsse 20' aus den beiden Heizkreisen H1 und H2 in die Rücklaufkammer 2' zurück und fließt von dieser durch die zweite Durchbrechung 18' in die Weichenkammer 3. Von dort fließt die abgekühlte Wärmetransportflüssigkeit durch den Rücklaufanschluß 30' des Primärkreislaufes wieder zum Heizkessel, um erneut erhitzt zu werden.

Wenn der Volumenstrom an Wärmetransportflüssigkeit, der von den Heizkreisen H1 und H2 über die Vorlaufanschlüsse 20 abgenommen wird, mit dem Volumenstrom an erhitzter Wärmetransportflüssigkeit, die über den Vorlaufanschluß 30 in die Vorlaufkammer 2 eingeleitet wird, übereinstimmt, ergibt sich keine Ausgleichsströmung durch die Durchbrechungen 18 und 18' und die Weichenkammer 3.

Wenn die beiden vorstehend genannten Volumenströme nicht übereinstimmen, ergibt sich z.B. zwischen dem Vorlaufanschluß 30 des Primärkreislaufes und dessen Rücklaufanschluß 30' durch die Weichenkammer 3 eine Ausgleichsströmung, wodurch die Funktion einer hydraulische Weiche bewirkt wird. Dabei wird erreicht, daß der primärkreis-oder kesselseitige Bypassdurchfluß in Form einer primärkreis- oder kesselkreisinternen Quellen-Senken-Strömung erfolgt, wobei die sekundärkreis- oder heizkreisseitige Strömung weitestgehend unberührt bleibt, was beim Anfahren des Heizkessels oder der Heizkessel oder bei der Versorgung mit einer Mindestumlaufmenge an Wärmetransportflüssigkeit hilfreich ist.

Aufgrund des Abstandes zwischen dem Vorlaufanschluß 30 und dem Rücklaufanschluß 30' des Primärkreises und durch die oben erläuterte Gestaltung des Rohrstutzens 32 werden dabei unerwünscht große unmittelbare Kurzschlußströmungen vom Vorlaufanschluß 30 des Primärkreises durch die Weichenkammer 3 hindurch zum Rücklaufanschluß 30' des Primärkreises vermieden. Vielmehr tritt eine Ausgleichsströmung oder ein Bypassdurchfluß nur bei wirklichem Bedarf, nämlich dann auf, wenn die Flüssigkeitsmengen oder Volumenströme, die einerseits im Primär- oder Kesselkreislauf und andererseits in den Sekundär- oder Heizkreisläufen zirkulieren, nicht übereinstimmen.

Der ringspaltförmige Durchlaß an der ersten Durchbrechung 18 und die die Perforation bildenden Durchbrechungen 33 im Rohrstutzen 32 sorgen zudem für eine sehr gute Vermischung von wärmerer und kälterer Wärmetransportflüssigkeit im Falle einer Ausgleichsströmung oder eines Bypassdurchflusses und sorgen so für eine stets homogene Temperatur in der Wärmetransportflüssigkeit, insbesondere in der Vorlaufkammer 2.

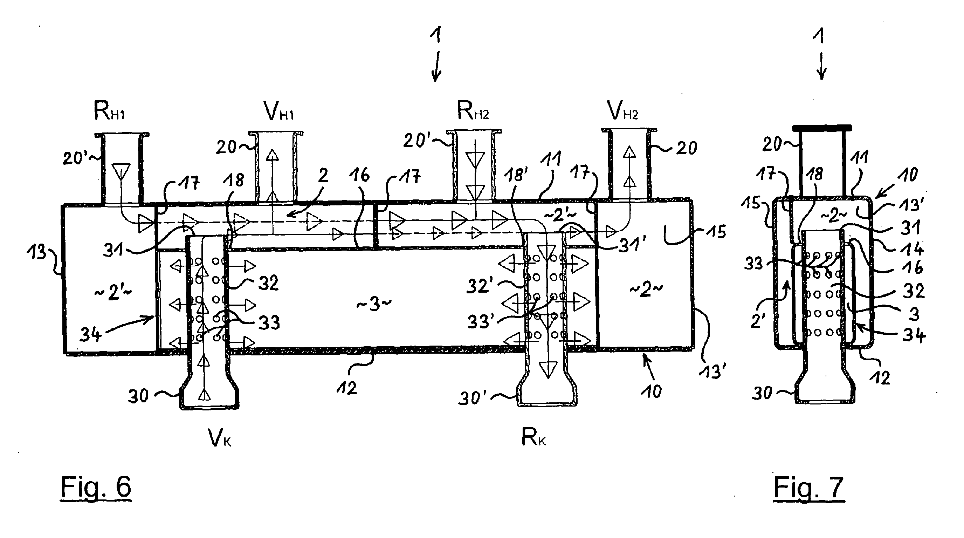

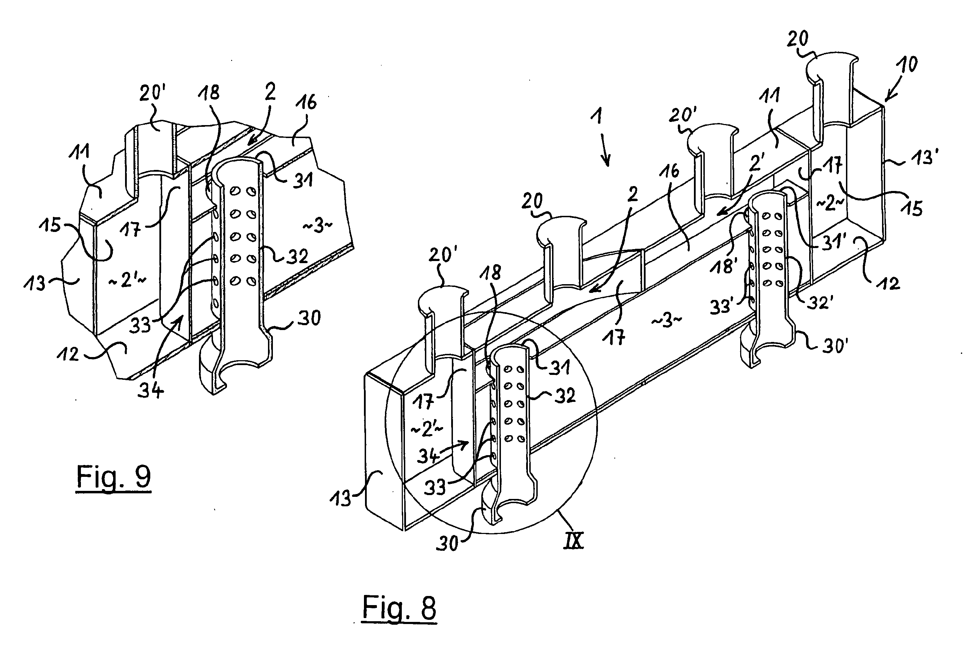

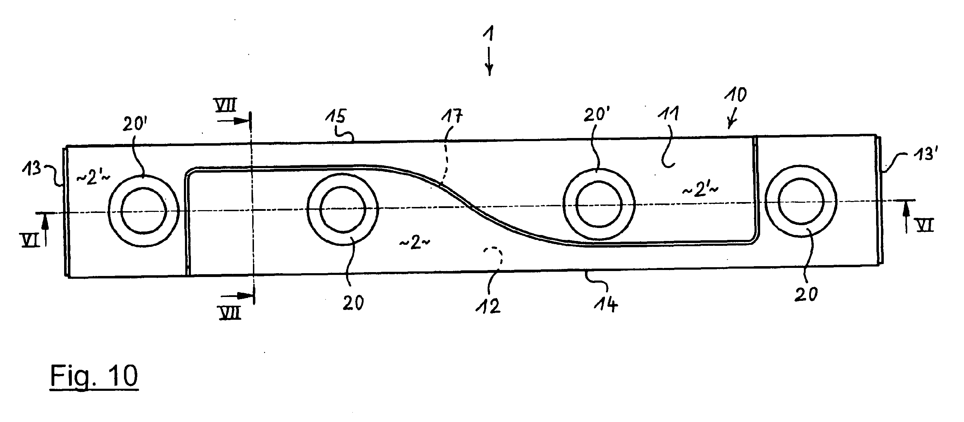

Die Figuren 6 bis 10 der Zeichnung zeigen den Rohrverteiler 1 in einer zweiten Ausführung. Der Unterschied zu der ersten Ausführung liegt insbesondere darin, daß bei dem Rohrverteiler 1 gemäß den Figuren 6 bis 10 der Rücklaufanschluß 30' des Primärkreises in Form eines Rohrstutzens 32' vertikal durch die Weichenkammer 3 und durch die zweite Durchbrechung 18' in der Trennwand 16 hindurch bis in die Rücklaufkammer 2' läuft und mit seinem inneren Ende 31' in diese Rücklaufkammer 2' mündet. In seinem in der Weichenkammer 3 liegenden Abschnitt besitzt der Rohrstutzen 32' mehrere eine Perforation bildende Durchbrechungen 33'. Dabei sind hier die beiden Rohrstutzen 32 und 32' untereinander identisch ausgeführt.

Ein weiterer Unterschied besteht darin, daß hier die Weichenkammer 3 eine etwas größere horizontale Länge innerhalb des Gehäuses 10 aufweist und daß der Vorlaufanschluß 30 und der Rücklaufanschluß 30' des Primärkreislaufes nun gegenüber den Vorlauf- bzw. Rücklaufanschlüssen 20, 20' der Sekundärkreisläufe in Horizontalrichtung versetzt sind. Die Vorlaufkammer 2 und die Rücklaufkammer 2' erstrecken sich hier jeweils über etwas weniger als die gesamte horizontale Länge des Gehäuses 10.

In seinen weiteren Teilen stimmt der Rohrverteiler 1 gemäß den Figuren 6 bis 10 mit dem ersten Ausführungsbeispiel überein und es wird hinsichtlich der weiteren mit Bezugsziffern versehenen Teile des Rohrverteilers 1 in den Figuren 6 bis 10 auf die Beschreibung der Figuren 1 bis 5 verwiesen.

Die Vorlauf anschlüsse 20 und die Rücklaufanschlüsse 20' der Sekundärkreisläufe sitzen bei dem zweiten Beispiel des Rohrverteilers 1 ebenfalls auf der Oberseite des Gehäuses 10 an dessen Deckwand 11 und sind auch hier in einer Linie angeordnet.

Im Betrieb hat der Rohrverteiler 1 gemäß dem zweiten Ausführungsbeispiel praktisch die gleiche Funktion und das gleiche Verhalten wie der zuvor schon beschriebene Rohrverteiler 1 gemäß dem in den Figuren 1 bis 5 dargestellten ersten Ausführungsbeispiel, wobei im zweiten Ausführungsbeispiel durch die Gestaltung des Rohrstutzens 32' des Rücklaufanschlusses 30' des Primärkreislaufes und der zweiten Durchbrechung 18' dem Konstrukteur des Rohrverteilers 1 noch weitere Einflußmöglichkeiten auf das Verhalten des Rohrverteilers 1 gegeben sind.

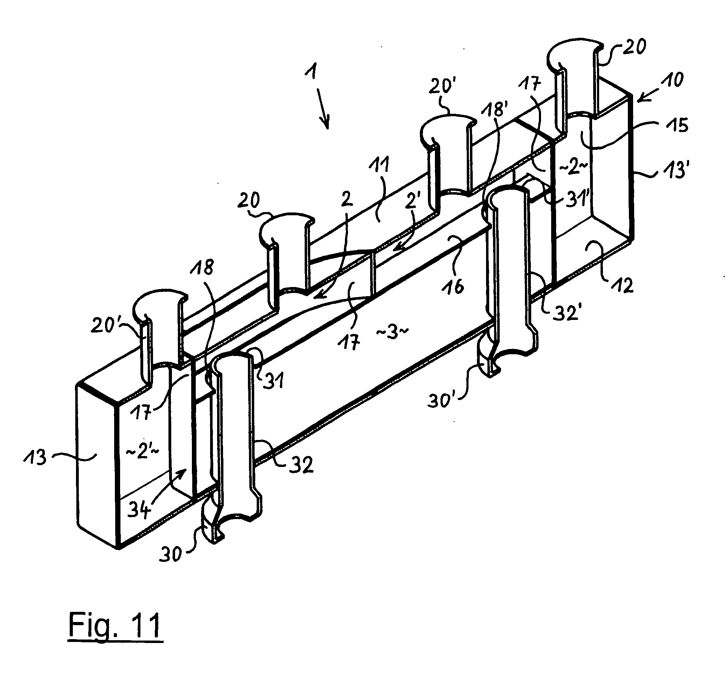

Figur 11 zeigt als drittes Ausführungsbeispiel des Rohrverteilers 1 eine Ausführung, die in den meisten Teilen mit der zweiten Ausführung des Rohrverteilers 1 übereinstimmt. Unterschiedlich ist bei dem Rohrverteiler 1 gemäß Figur 11 zu dem zuvor beschriebenen zweiten Ausführungsbeispiel, daß nun die Rohrstutzen 32 und 32' des Vorlaufanschlusses 30 und des Rücklaufanschlusses 30' des Primärkreislaufes an ihrem Umfang geschlossen, also ohne jegliche Durchbrechungen, ausgeführt sind.

Übereinstimmend mit dem zweiten Ausführungsbeispiel ragen auch hier die Rohrstutzen 32 und 32' durch die Weichenkammer 3 hindurch vertikal nach oben bis in die Vorlaufkammer 2 bzw. Rücklaufkammer 2'. Dabei treten die Rohrstutzen 32 und 32' nahe ihrem oberen Ende 31, 31' jeweils durch die horizontale Trennwand 16, die die Weichenkammer 3 nach oben begrenzt, hindurch. Dazu sind die beiden Durchbrechungen 18 und 18' in der horizontalen Trennwand 16 angebracht. Auch hier ist der Durchmesser der Durchbrechungen 18 und 18' größer als der Außendurchmesser der Rohrstutzen 32 und 32', wodurch jeweils ein ringförmiger Durchlaß als Strömungsverbindung zum einen zwischen der Weichenkammer 3 und der Vorlaufkammer 2 und zum anderen zwischen der Weichenkammer 3 und der Rücklaufkammer 2' gebildet wird.

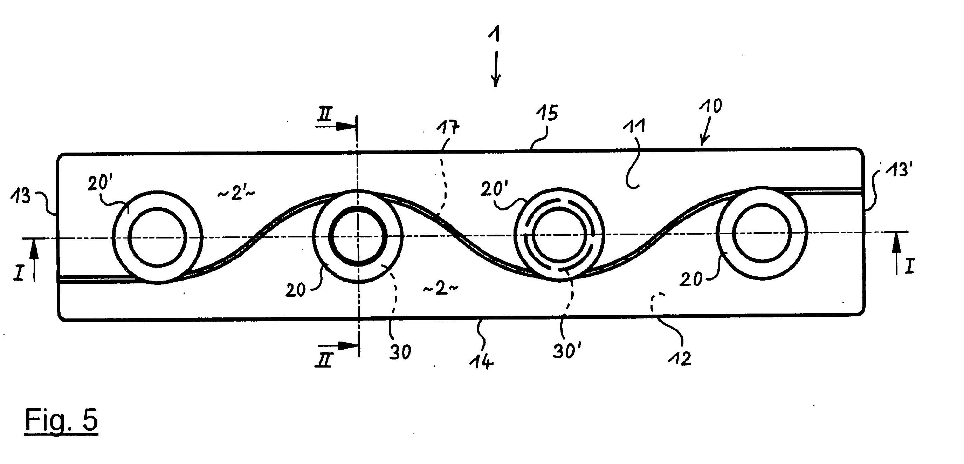

Die übrigen Teile des Rohrverteilers 1 gemäß Figur 11 entsprechen den in den Figuren 5 bis 10 beschriebenen und die gleichen Bezugsziffern aufweisenden Teilen. Auch die Funktion des Rohrverteilers 1 gemäß Figur 11 entspricht der zuvor schon beschriebenen Funktion der weiter oben erläuterten beiden Ausführungsbeispiele, wobei bei dem Rohrverteiler 1 nach Figur 11 für die Ausgleichsströmung allein die Strömungswege durch die Durchbrechungen 18 und 18' zur Verfügung stehen.

In der zweiten und dritten Ausführung hat der Rohrverteiler 1 eine zu seiner Mittelsenkrechten derart symmetrische Gestaltung, daß er problemlos auch in einer um 180° um seine Mittelsenkrechte gedrehten Stellung eingebaut werden kann, was die Montage vereinfacht.

Anders als bei den Ausführungsbeispielen gemäß den Zeichnungsfiguren dargestellt, kann der Rohrverteiler 1 auch eine größere Anzahl von Vorlaufanschlüssen 20 und Rücklaufanschlüssen 20' für eine entsprechend größere Anzahl von Sekundärkreisläufen aufweisen, wenn mehr als zwei Heizkreise zu versorgen sind. Die Anpassung an eine gewünschte Anzahl von Sekundärkreisläufen oder Heizkreisen kann einfach durch entsprechende Verlängerung des Gehäuses 10 des Rohrverteilers 1 erfolgen, wodurch ein kostengünstiges Baukastensystem ermöglicht wird.

## Patentansprüche

1. Rohrverteiler (1) für eine Heizungs- oder Kühlanlage mit einem Primärkreislauf und mehreren Sekundärkreisläufen, mit einem länglichen, im Betrieb horizontal angeordneten Gehäuse (10), in dem eine Vorlaufkammer (2) mit mehreren Vorlaufanschlüssen (20) und eine Rücklaufkammer (2') mit mehreren Rücklaufanschlüssen (20') der Sekundärkreisläufe vorgesehen sind, und mit einer hydraulischen Weiche zur hydraulischen Entkopplung des an einen Vorlaufanschluß (30) und einen Rücklaufanschluß (30') des Rohrverteilers angeschlossenen Primärkreislaufes von den Sekundärkreisläufen, wobei die hydraulische Weiche in das Gehäuse (10) integriert ist und eine Weichenkammer (3) umfaßt, die an zwei horizontal voneinander beabstandeten Stellen einerseits mit der Vorlaufkammer (2) und andererseits mit der Rücklaufkammer (2') strömungsmäßig verbunden ist,
**dadurch gekennzeichnet,**
- **daß** der Vorlaufanschluß (30) des Primärkreislaufes in Form eines Rohrstutzens (32) von außen durch die Weichenkammer (3) hindurch und durch eine Durchbrechung (18) in einer die Weichenkammer (3) von der Vorlaufkammer (2) abgrenzenden Trennwand (16) hindurchgeführt ist und in die Vorlaufkammer (2) mündet und
- **daß** die Durchbrechung (18) in der Trennwand (16) größer ist als der Außendurchmesser des Rohrstutzens (32) und um den Rohrstutzen (32) herum einen ringförmigen Durchlaß als Strömungsverbindung zwischen der Weichenkammer (3) und der Vorlaufkammer (2') bildet.

2. Rohrverteiler nach Anspruch 1, **dadurch gekennzeichnet, daß** der Rücklaufanschluß (30') des Primärkreislaufes unmittelbar von außen in die Weichenkammer (3) mündet.

3. Rohrverteiler nach Anspruch 2, **dadurch gekennzeichnet, daß** die strömungsmäßige Verbindung zwischen der Weichenkammer (3) und der Rücklaufkammer (2') durch eine zweite, mit dem Rücklaufanschluß (30') des Primärkreislaufes fluchtende Durchbrechung (18') in einer die Weichenkammer (3) von der Rücklaufkammer (2') abgrenzenden Trennwand (16) gebildet ist.

4. Rohrverteiler nach Anspruch 1, **dadurch gekennzeichnet, daß** der Rücklaufanschluß (30') des Primärkreislaufes in Form eines Rohrstutzens (32') von außen durch die Weichenkammer (3) hindurch und durch eine zweite Durchbrechung (18') in einer die Weichenkammer (3) von der Rücklaufkammer (2') abgrenzenden Trennwand (16) hindurchgeführt ist und in die Rücklaufkammer (2') mündet und daß die zweite Durchbrechung (18') in der Trennwand (16) größer ist als der Außendurchmesser dieses Rohrstutzens (32') und um den Rohrstutzen (32') herum einen ringförmigen Durchlaß als Strömungsverbindung zwischen der Weichenkammer (3) und der Rücklaufkammer (2') bildet.

5. Rohrverteiler nach einem der vorhergehenden Ansprüche, **dadurch gekennzeichnet, daß** der Rohrstutzen (32) des Vorlaufanschlusses (30) des Primärkreislaufes und/oder der Rohrstutzen (32') des Rücklaufanschlusses (30') des Primärkreislaufes (jeweils) in einem in der Weichenkammer (3) liegenden Rohrstutzenabschnitt mit einer oder mehreren Durchbrechungen (33, 33') versehen sind/ist.

6. Rohrverteiler nach Anspruch 5, **dadurch gekennzeichnet, daß** die Durchbrechungen (33, 33') im Rohrstutzenabschnitt (jeweils) die Form einer Perforation haben.

7. Rohrverteiler nach einem der vorhergehenden Ansprüche, **dadurch gekennzeichnet, daß** die Trennwand (16) horizontal angeordnet ist, daß die Vorlaufkammer (2) und die Rücklaufkammer (2') nebeneinander liegen und voneinander durch eine gewellte Zwischenwand (17) getrennt sind, die vertikal zwischen einer Deckwand (11) des Gehäuses (10) und der horizontalen Trennwand (16) angeordnet ist, und daß die Vorlaufanschlüsse (20) der Vorlaufkammer (2) und die Rücklaufanschlüsse (20') der Rücklaufkammer (2') für die Sekundärkreisläufe alle unmittelbar in ihre zugehörige Kammer (2, 2') münden.

8. Rohrverteiler nach Anspruch 7, **dadurch gekennzeichnet, daß** die Vorlaufanschlüsse (20) der Vorlaufkammer (2) und die Rücklaufanschlüsse (20') der Rücklaufkammer (2') für die Sekundärkreisläufe in einer Linie an der oberseitigen Deckwand (11) des Gehäuses (10) liegen.

9. Rohrverteiler nach Anspruch 7 oder 8, **dadurch gekennzeichnet, daß** der Vorlaufanschluß (30) und der Rücklaufanschluß (30') des Primärkreislaufes voneinander in Längsrichtung des Gehäuses (10) beabstandet an einer unterseitigen Bodenwand (12) des Gehäuses (10) liegen.

10. Rohrverteiler nach einem der vorhergehenden Ansprüche, **dadurch gekennzeichnet, daß** die Vorlaufkammer (2) und die Rücklaufkammer (2') ein im wesentlichen gleiches Volumen aufweisen und daß die Weichenkammer (3) ein Volumen aufweist, das 25 bis 50% des Volumens der Vorlaufkammer (2) oder der Rücklaufkammer (2') beträgt.

11. Rohrverteiler nach einem der vorhergehenden Ansprüche, **dadurch gekennzeichnet, daß** die Weichenkammer (3) im Gehäuse (10) die Form einer Leitung oder eines Kastens (34) mit einem eckigen oder runden Querschnitt hat und stirnendseitig geschlossen ist.

12. Rohrverteiler nach einem der vorhergehenden Ansprüche, **dadurch gekennzeichnet, daß** sein Gehäuse (10) mindestens einen Schlammsammelbereich und/oder einen Schlammabzugstutzen in einem Bereich mit einer geringen Strömungsgeschwindigkeit aufweist.

13. Rohrverteiler nach einem der vorhergehenden Ansprüche, **dadurch gekennzeichnet, daß** an oder in seinem Gehäuse (10) eine oder mehrere Temperaturfühlermuffen für Temperaturfühler vorgesehen sind.

14. Rohrverteiler nach einem der vorhergehenden Ansprüche, **dadurch gekennzeichnet, daß** an einer oberseitigen Deckwand (11) des Gehäuses (10) mindestens ein Entlüftungsstutzen angeordnet ist.

15. Rohrverteiler nach einem der vorhergehenden Ansprüche, **dadurch gekennzeichnet, daß** er aus vorgeformten, miteinander verschweißten Stahlteilen besteht.

16. Rohrverteiler nach einem der vorhergehenden Ansprüche, **dadurch gekennzeichnet, daß** er ein Heizkreisverteiler und -sammler zur hydraulischen Verbindung eines den Primärkreislauf bildenden Wärmequellenkreises mit mehreren die Sekundärkreisläufe bildenden Wärmeverbraucherkreisen ist.

17. Rohrverteiler nach einem der vorhergehenden Ansprüche, **dadurch gekennzeichnet, daß** er eine Kaskadeneinheit zur hydraulischen Verbindung mehrerer Wärmequellenkreise mit einem Wärmeverbraucherkreis ist.

## Claims

1. Manifold (1), for a heating or cooling system with a primary circuit and a plurality of secondary circuits, with an elongated housing (10) which is horizontally arranged in operation and in which an inlet flow chamber (2) with a plurality of inlet flow connections (20) and a return flow chamber (2') with a plurality of return flow connections (20') of the secondary circuits are provided, and with a hydraulic shunt for hydraulic decoupling - from the secondary circuits - the primary circuit connected to an inlet flow connection (30) and a return flow connection (30') of the manifold, wherein the hydraulic shunt is integrated in the housing (10) and comprises a shunt chamber (3) which is connected
- in terms of the flow - at two horizontally spaced apart places to the inlet flow chamber (2) on the one hand and to the return flow chamber (2') on the other hand,
**characterized in that**
- the inlet flow connection (30) of the primary circuit in form of a pipe nozzle (32) is passed from the outside through the shunt chamber (3) and through an opening (18) in a partition (16) separating the shunt chamber (3) from the inlet flow chamber (2) and leads into the inlet flow chamber (2), and
- the opening (18) in the partition (16) is larger than the outside diameter of the pipe nozzle (32) and forms, around the pipe nozzle (32), an annular passage as a flow connection between the shunt chamber (3) and the inlet flow chamber (2').

2. Manifold according to claim 1, **characterized in that** the return flow connection (30') of the primary circuit leads directly from the outside into the shunt chamber (3).

3. Manifold according to claim 2, **characterized in that** the connection - in terms of the flow - between the shunt chamber (3) and the return flow chamber (2') is formed by a second opening (18') aligned with the return flow connection (30') of the primary circuit in a partition (16) separating the shunt chamber (3) from the return flow chamber (2').

4. Manifold according to claim 1, **characterized in that** the return flow connection (30') of the primary circuit in the form of a pipe nozzle (32') is passed from the outside through the shunt chamber (3) and through a second opening (18') in a partition (16) separating the shunt chamber (3) from the return flow chamber (2') and leads into the return flow chamber (2'), and that the second opening (18') in the partition (16) is larger than the outside diameter of this pipe nozzle (32') and forms, around the pipe nozzle (32'), an annular passage as a flow connection between the shunt chamber (3) and the return flow chamber (2').

5. Manifold according to any one of the preceding claims, **characterized in that** the pipe nozzle (32) of the inlet flow connection (30) of the primary circuit and/or the pipe nozzle (32') of the return flow connection (30') of the primary circuit (each) is/are provided with one opening or a plurality of openings (33, 33') in a pipe nozzle section located in the shunt chamber (3).

6. Manifold according to claim 5, **characterized in that** the openings (33, 33') in the pipe nozzle section (each) have the form of a perforation.

7. Manifold according to any one of the preceding claims, **characterized in that** the partition (16) is horizontally arranged, that the inlet flow chamber (2) and the return flow chamber (2') lie side by side and are separated from each other by a corrugated intermediate wall (17) which is vertically arranged between a cover wall (11) of the housing (10) and the horizontal partition (16), and that the inlet flow connections (20) of the inlet flow chamber (2) and the return flow connections (20') of the return flow chamber (2') for the secondary circuits all lead directly into their appropriate chamber (2, 2').

8. Manifold according to claim 7, **characterized in that** the inlet flow connections (20) of the inlet flow chamber (2) and the return flow connections (20') of the return flow chamber (2') for the secondary circuits are provided in one line on the top-side cover wall (11) of the housing (10).

9. Manifold according to claim 7 or 8, **characterized in that** the inlet flow connection (30) and the return flow connection (30') of the primary circuit are spaced apart from each other in the longitudinal direction of the housing (10) on an underside base wall (12) of the housing (10).

10. Manifold according to any one of the preceding claims, **characterized in that** the inlet flow chamber (2) and the return flow chamber (2') have an essentially equal volume and that the shunt chamber (3) has a volume which is 25 to 50% of the volume of the inlet flow chamber (2) or of the return flow chamber (2').

11. Manifold according to any one of the preceding claims, **characterized in that** the shunt chamber (3) in the housing (10) has the form of a line or a box (34) with a rectangular or round cross section and is closed on the front end side.

12. Manifold according to any one of the preceding claims, **characterized in that** its housing (10) exhibits at least one sludge collection area and/or one sludge outlet nozzle in an area with a low flow velocity.

13. Manifold according to any one of the preceding claims, **characterized in that** one or a plurality of temperature sensor sleeve(s) for temperature sensors is provided on or in its housing (10).

14. Manifold according to any one of the preceding claims, **characterized in that** at least one vent nozzle is arranged on a top-side cover wall (11) of the housing (10).

15. Manifold according to any one of the preceding claims, **characterized in that** it consists of preformed steel parts welded together.

16. Manifold according to any one of the preceding claims, **characterized in that** it is a heating circuit manifold and header for the hydraulic connection of a heat source circuit forming the primary circuit with a plurality of heat consumer circuits forming the secondary circuits.

17. Manifold according to any one of the preceding claims, **characterized in that** it is a cascade unit for the hydraulic connection of a plurality of heat source circuits with a heat consumer circuit.

## Revendications

1. Distributeur de fluide (1) pour une installation de chauffage ou une installation réfrigérante avec un circuit primaire et plusieurs circuits secondaires, avec un boîtier (10) oblong disposé horizontalement pendant le fonctionnement, dans lequel sont prévues une chambre de départ (2) avec plusieurs raccords de départ (20) et une chambre de retour (2') avec plusieurs raccords de retour (20') des circuits secondaires, et avec un séparateur hydraulique permettant de séparer hydrauliquement le circuit primaire, connecté à un raccord de départ (30) et à un raccord de retour (30') du distributeur de fluide, des circuits secondaires, sachant que le séparateur hydraulique est intégré dans le boîtier (10) et comprend une chambre de séparation (3) qui, à deux emplacements situés à distance l'un de l'autre dans le sens horizontal, est reliée fluidiquement d'un côté à la chambre de départ (2) et d'un autre côté à la chambre de retour (2'),
**caractérisé en ce**
- **que** le raccord de départ (30) du circuit primaire en forme de raccord tubulaire (32) est conduit de l'extérieur à travers la chambre de séparation (3) et par une ouverture (18) située dans une paroi (16) séparant la chambre de séparation (3) de la chambre de départ (2), et aboutit dans la chambre de départ (2), et
- **que** l'ouverture (18) située dans la paroi de séparation (16) est plus grande que le diamètre extérieur du raccord tubulaire (32) et forme autour du raccord tubulaire (32) un passage de forme annulaire servant de liaison fluidique entre la chambre de séparation (3) et la chambre de départ (2').

2. Distributeur de fluide selon la revendication 1, **caractérisé en ce que** le raccord de retour (30') du circuit primaire aboutit immédiatement de l'extérieur dans la chambre de séparation (3).

3. Distributeur de fluide selon la revendication 2, **caractérisé en ce que** la liaison fluidique entre la chambre de séparation (3) et la chambre de retour (2') est formée par une seconde ouverture (18') alignée avec le raccord de retour (30') du circuit primaire et située dans une paroi (16) séparant la chambre de séparation (3) de la chambre de retour (2').

4. Distributeur de fluide selon la revendication 1, **caractérisé en ce que** le raccord de retour (30') du circuit primaire en forme de raccord tubulaire (32') est conduit de l'extérieur à travers la chambre de séparation (3) et par une seconde ouverture (18') située dans une paroi (16) séparant la chambre de séparation (3) de la chambre de retour (2'), et aboutit dans la chambre de retour (2'), et que la seconde ouverture (18') dans la paroi de séparation (16) est plus grande que le diamètre extérieur de ce raccord tubulaire (32') et forme autour du raccord tubulaire (32') un passage de forme annulaire servant de liaison fluidique entre la chambre de séparation (3) et la chambre de retour (2').

5. Distributeur de fluide selon l'une des revendications précédentes, **caractérisé en ce que** le raccord tubulaire (32) du raccord de départ (30) du circuit primaire et/ou le raccord tubulaire (32') du raccord de retour (30') du circuit primaire est/sont (respectivement) pourvu(s) d'une ou plusieurs ouvertures (33, 33') dans une section de raccord tubulaire située dans la chambre de séparation (3).

6. Distributeur de fluide selon la revendication 5, **caractérisé en ce que** les ouvertures (33, 33') dans la section de raccord tubulaire présentent (respectivement) la forme d'une perforation.

7. Distributeur de fluide selon l'une des revendications précédentes, **caractérisé en ce que** la paroi de séparation (16) est disposée à l'horizontale, que la chambre de départ (2) et la chambre de retour (2') sont situées l'une à côté de l'autre et sont séparées l'une de l'autre par une paroi intermédiaire (17) ondulée disposée à la verticale entre une paroi de recouvrement (11) du boîtier (10) et la paroi de séparation horizontale (16), et que les raccords de départ (20) de la chambre de départ (2) et les raccords de retour (20') de la chambre de retour (2') pour les circuits secondaires aboutissent tous directement dans leur chambre respective (2, 2').

8. Distributeur de fluide selon la revendication 7, **caractérisé en ce que** les raccords de départ (20) de la chambre de départ (2) et les raccords de retour (20') de la chambre de retour (2') pour les circuits secondaires sont disposés en une ligne sur la paroi de recouvrement supérieure (11) du boîtier (10).

9. Distributeur de fluide selon la revendication 7 ou 8, **caractérisé en ce que** le raccord de départ (30) et le raccord de retour (30') du circuit primaire sont situés à distance l'un de l'autre dans le sens longitudinal du boîtier (10) sur une paroi de base inférieure (12) du boîtier (10).

10. Distributeur de fluide selon l'une des revendications précédentes, **caractérisé en ce que** la chambre de départ (2) et la chambre de retour (2') présentent un volume essentiellement identique et que la chambre de séparation (3) présente un volume s'élevant à 25 à 50 % du volume de la chambre de départ (2) ou de la chambre de retour (2').

11. Distributeur de fluide selon l'une des revendications précédentes, **caractérisé en ce que** la chambre de séparation (3) présente dans le boîtier (10) la forme d'une canalisation ou d'une caisse (34) avec une coupe transversale anguleuse ou ronde et est fermée du côté de son extrémité frontale.

12. Distributeur de fluide selon l'une des revendications précédentes, **caractérisé en ce que** son boîtier (10) présente au moins une zone de collecte des dépôts et/ou une goulotte de décharge des dépôts dans une zone à faible vitesse d'écoulement.

13. Distributeur de fluide selon l'une des revendications précédentes, **caractérisé en ce qu'**un ou plusieurs manchons pour des sondes de température sont prévus contre ou dans son boîtier (10).

14. Distributeur de fluide selon l'une des revendications précédentes, **caractérisé en ce qu'**au moins une tubulure de ventilation est disposée sur une paroi de recouvrement (11) supérieure du boîtier (10).

15. Distributeur de fluide selon l'une des revendications précédentes, **caractérisé en ce qu'**il est composé d'éléments en acier préfabriqués et assemblés par soudage.

16. Distributeur de fluide selon l'une des revendications précédentes, **caractérisé en ce qu'**il est un distributeur et collecteur de circuits de chauffage pour la liaison hydraulique entre un circuit de source de chaleur formant le circuit primaire et plusieurs circuits de consommation de chaleur formant les circuits secondaires.

17. Distributeur de fluide selon l'une des revendications précédentes, **caractérisé en ce qu'**il est un ensemble en cascade pour la liaison hydraulique entre plusieurs circuits de source de chaleur et un circuit de consommation de chaleur.
